# EUROPÄISCHE PATENTSCHRIFT

(11) **EP 3 110 681 B1**
(45) Veröffentlichungstag und Bekanntmachung des Hinweises auf die Patenterteilung: **06.06.2018**
(21) Anmeldenummer: 15700304.7
(22) Anmeldetag: 14.01.2015
(51) Int. Cl.: B62D 5/04

(54) **VERFAHREN ZUM BETREIBEN EINES LENKSYSTEMS**
METHOD FOR OPERATING A STEERING SYSTEM
PROCÉDÉ PERMETTANT DE FAIRE FONCTIONNER UN SYSTÈME DE DIRECTION

(30) Priorität: 25.02.2014 DE 102014102424
(43) Veröffentlichungstag der Anmeldung: 04.01.2017
(73) Patentinhaber: Robert Bosch Automotive Steering GmbH, 73527 Schwäbisch Gmünd (DE)
(72) Erfinder: WEBER, Markus, 73035 Göppingen (DE); IRTENKAUF, Timo, 73529 Schwäbisch Gmünd (DE)
(86) Internationale Anmeldenummer: PCT/EP2015/050552
(87) Internationale Veröffentlichungsnummer: WO 2015/128110

(56) Entgegenhaltungen:
- WO-A1-2008/038006
- DE-A1-102004 028 827
- DE-A1-102006 041 236

## Beschreibung

Die Erfindung betrifft ein Verfahren zum Betreiben eines Lenksystems eines Kraftfahrzeugs mit einer elektrischen Antriebseinheit zur Lenkkraftunterstützung nach dem Oberbegriff des Anspruchs 1.

Es ist bekannt, dass Lenksysteme mit Hilfe einer Software, die auf einem Steuergerät läuft, betrieben werden. Ebenso ist bekannt, dass Software-Fehler behandelt werden müssen, um einer fehlerhaften Funktion des Lenksystems vorzubeugen.

Aus der WO 2008/038006 A1 ist ein Verfahren zum Betreiben eines Lenksystems eines Kraftfahrzeugs mit einer elektrischen Antriebseinheit zur Lenkunterstützung bekannt, die mittels einer Software betrieben wird.

Aus der DE 10 2004 028 827 A1 ist ein Verfahren zum Betrieb eines Lenksystems bekannt, bei dem mehrere Systemzustände verwendet werden. Diese Systemzustände umfassen beispielsweise das Initialisieren des Lenksystems, die teilweise Bereitstellung der Funktionalität der Nutzanwendungen des Lenksystems, eine Bereitstellung der Funktionalität kinematischer Nutzanwendungen des Lenksystems, einen Fehlermodus sowie eine Abschaltung.

Durch die erhöhte Marktdurchdringung elektromechanischer Lenksysteme erhöhen sich auch die Anforderungen an die Verfügbarkeit dieser Systeme.

Das der Erfindung zu Grunde liegende Problem wird durch ein Verfahren nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Bei dem erfindungsgemäßen Verfahren wird während eines Neustarts einer Software zum Betrieb einer Antriebseinheit die Antriebseinheit derart betrieben, so dass ein in die Antriebseinheit eingeleitetes Drehmoment gedämpft wird.

Der Fahrzeuglenker sowie der Fahrbahnuntergrund beeinflussen während des Neustarts der Software über das Lenksystem das in die Antriebseinheit eingetragene Drehmoment. Durch die Dämpfung des in die Antriebseinheit eingeleiteten Drehmoments kann eine Zeitspanne ohne eine durch Software berechnete Servounterstützung derart überbrückt werden, dass für den Fahrzeuglenker keine wesentliche Beeinträchtigung bei der Beherrschung der Fahrsituation entsteht. Hierbei ist insbesondere zu Berücksichtigen, dass die menschliche Reaktionszeit, also die Zeitspanne beginnend mit einem plötzlich eintretendes Ereignis und einer vom Menschen ausgelösten Aktion üblicherweise etwa 1,5 bis 2 Sekunden beträgt. Erwartet der Mensch das Ereignis, so kann die Reaktionszeit bis auf etwa 500 ms reduziert werden. Die Dauer eines Software-Ausfalls des Lenksystems und ein damit verbundener Neustart der Software benötigt derzeit mindestens 200 ms.

Durch das erfindungsgemäße Verfahren kann darüber hinaus ein sogenannter Kick-Back Effekt vermieden werden. Während des Neustarts der Software wäre die Antriebseinheit stromlos, womit die Antriebseinheit keinen Einfluss auf die Lenkbewegung des Lenksystems hätte. Der Kick-Back-Effekt entstünde durch ein bei oder während dem Neustart der Software wegfallendes Servomoment. Dies kann zu einer den Fahrzeuglenker irritierenden Lenksituation führen, da während des Neustarts der Software das Lenkrad ohne Servounterstützung bewegbar ist. Darüber hinaus führt die erfindungsgemäße Dämpfung des eingeleiteten Drehmoments zu keiner absoluten Blockierung der Drehbewegung, sondern sorgt lediglich für ein kurzzeitiges gedämpftes Halten der Lenkposition.

Der Fahrzeuglenker bekommt durch das erfindungsgemäße Verfahren am Lenkrad lediglich eine mechanische Rückmeldung, die einem Überfahren einer Unebenheit der Fahrbahn entspricht. So kann bei einem Auf- /Einbringen eines im Wesentlichen konstanten Drehmoments durch den Fahrer die Position der Antriebseinheit und damit des Lenkrads im Wesentlichen gehalten werden. Bei einem Aufbringen eines über der Zeit veränderten Drehmoments durch den Fahrer kann durch die vorgeschlagene Dämpfung die Drehzahl der elektrischen Antriebseinheit und die Drehzahl des Lenkrads während des Neustarts der Software vorteilhaft verringert werden.

Bei einer vorteilhaften Ausführungsform des Verfahrens wird während des Neustarts der Software ein Kurzschluss zwischen zumindest zwei Antriebsphasen der Antriebseinheit hergestellt. Damit kann auf einfache Art und Weise einem in die Antriebseinheit eingeleiteten Drehmoment entgegengewirkt werden.

In einer vorteilhaften Ausführungsform wird durch die Anwendung eines pulsweitenmodulierten Signals die Stärke der Dämpfung eingestellt. Damit kann eine Anpassung an einen jeweiligen Fahrzeugtyp erreicht werden.

Eine weitere vorteilhafte Ausführungsform des Verfahrens sieht vor, dass das pulsweitenmodulierte Signal in Abhängigkeit von einem vor oder bei Feststellung des Softwarefehlers bestehenden Zustands ermittelt wird. Dadurch kann die Überbrückung der Neustartphase der Software an die jeweilige Fahr- und Lenksituation angepasst werden. Damit kann der Betrieb der elektrischen Antriebseinheit während des Neustarts an die Fahrsituation, die vor der zweiten Zeitdauer herrschte, angepasst werden.

In einer weiteren vorteilhaften Ausführungsform wird während des Neustarts der Software für eine vor dem Neustart der Software vorliegende Drehzahl der Antriebseinheit oberhalb eines Schwellwerts keine Dämpfung des in die Antriebseinheit eingeleiteten Drehmoments durchgeführt. Damit kann ein Neustart auch in Lenksituation durchgeführt werden, in denen eine starke Lenkbewegung durchgeführt wird. Dadurch dass bei dieser starken Lenkbewegung keine Dämpfung durchgeführt wird, kann die Fahrsicherheit erhöht werden, da dem Lenkwunsch im Sinne einer starken Lenkbewegung nicht durch die Dämpfung entgegengewirkt wird.

In einer vorteilhaften Ausführungsform wird während eines Startbetriebs des Lenksystems, insbesondere des Kraftfahrzeugs, die Software während einer ersten Zeitdauer gestartet. Während eines Fahrbetriebs des Kraftfahrzeugs wird eine fehlerhafte Funktion der Software festgestellt. In Abhängigkeit von der Feststellung der fehlerhaften Funktion der Software wird die Software während einer zweiten Zeitdauer derart neu gestartet, so dass die zweite Zeitdauer kleiner ist als die erste Zeitdauer. Damit wird ein Verfahren geschaffen, das die Verfügbarkeit des elektromechanischen Lenksystems wesentlich erhöht. Durch die verkürzte zweite Zeitdauer wird vorteilhaft die mechanische Rückfallebene nur kurzzeitig genutzt, um das Lenksystem möglichst schnell wieder mit einer Servounterstützung zu betreiben.

In einer vorteilhaften Ausführungsform wird in einen Limp-Home-Betrieb gewechselt, der ein sicheres Fahren mit Lenkkraftunterstützung auch bei reduziertem Funktionsumfang des Lenksystems garantiert.

In einer vorteilhaften Ausführungsform wird während des Limp-Home-Betriebs das Drehmoment gegenüber einem Normalbetrieb um einen Faktor reduziert, um zum einen Beschädigungen durch fehlerhafte Funktion der Software zu vermeiden sowie um den Fahrer durch das reduzierte Drehmoment auf die besondere Fahrsituation aufmerksam zu machen und damit den Fahrer zu einem vorsichtigen Fahren zu bewegen. Darüber hinaus sind im Limp-Home-Betrieb gegenüber dem Normalbetrieb weniger Software-Funktionen, beispielsweise Komfort-Funktionen, aktiv, womit Fehleinflüsse, insbesondere ausgehend von den abgeschalteten Software-Funktionen, eliminiert werden können.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung oder Darstellung in der Beschreibung oder in der Zeichnung. Es werden für funktionsäquivalente Größen in allen Figuren auch bei unterschiedlichen Ausführungsformen teilweise die gleichen Bezugszeichen verwendet.

Nachfolgend werden beispielhafte Ausführungsformen der Erfindung unter Bezugnahme auf die Zeichnung erläutert. In der Zeichnung zeigen:
- Figur 1: beispielhaft in schematischer Form ein Lenksystem;
- Figur 2: in schematischer Form eine Leistungselektronik zum Betrieb einer elektrischen Antriebseinheit;
- Figur 3: ein schematisches Drehmoment-Zeit-Diagramm;
- Figur 4: ein schematisches Ablaufdiagramm; und
- Figuren 5 und 6: jeweils ein schematisches Zugangs-Übergangs-Diagramm.

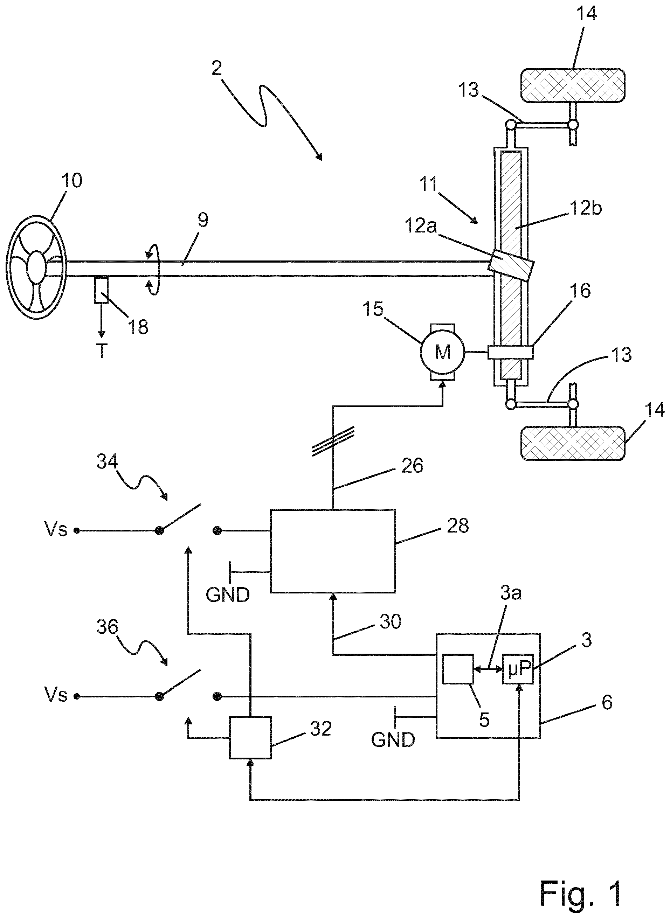

In Figur 1 ist eine als Steuergerät 6 bezeichnete Steuer- und/oder Regeleinrichtung dargestellt, die einem Lenksystem 2 zugeordnet ist. Das Lenksystem 2 wird auch als Lenkvorrichtung bezeichnet. In dem Steuergerät 6 ist ein Rechner (z. B. Mikrocomputer oder Mikrocontroller) mit einem Prozessor 3 angeordnet, wobei der Prozessor 3 über eine Datenleitung 3a, beispielsweise ein Bussystem, mit einem Speicherelement 5 verbunden ist. Die hier beschriebenen Verfahren können insbesondere als ein Computerprogramm für ein digitales Rechengerät wie den Prozessor 3 ausgeführt sein. Auf dem digitalen Rechengerät 3 ist ein Computerprogramm zur Ausführung des Verfahrens lauffähig. Des Weiteren kann das Computerprogramm auf dem Speicherelement 5 für das Steuergerät 6 des Lenksystems 2 abgespeichert sein. Über eine Leistungselektronik 28 ist das Steuergerät 6 mit einer elektrischen Antriebseinheit 15 einer Hilfskraftlenkung zur Lenkkraftunterstützung verbunden, wodurch eine Steuerung und/oder Regelung der elektrischen Antriebseinheit 15 durch das Steuergerät 6 ermöglicht wird. Die elektrische Antriebseinheit 15 ist beispielsweise als Elektromotor ausgebildet und wirkt über ein Getriebe 16 auf eine Zahnstange 12b. An einem Drehstab 9 ist ein Lenkmittel 10, beispielsweise ein Lenkrad angeordnet, mittels dessen ein Drehmoment auf den Drehstab 9 durch Betätigen des Lenkmittels 10 durch einen Fahrer aufbringbar ist.

Die Lenkvorrichtung 2 weist ferner ein Lenkgetriebe 11 auf, das beispielsweise als Zahnstangenlenkgetriebe ausgebildet ist. Das Lenkgetriebe 11 kann aber auch als Kugelumlaufgetriebe beziehungsweise als Kugelmuttergetriebe ausgebildet sein. In der folgenden Beschreibung wird überwiegend von einer Zahnstangenlenkung ausgegangen, wobei das Lenkgetriebe ein Ritzel 12a und die Zahnstange 12b umfasst. Jedoch ist für die Erfindung die Art der Lenkung unerheblich. Die in Figur 1 dargestellte Lenkvorrichtung 2 könnte statt als Zahnstangenlenkung beispielsweise als eine Kugelmutterlenkung oder eine Einzelradlenkung realisiert sein. Das Lenkgetriebe 11 ist über das Ritzel 12a und die Zahnstange 12b auf jeder Fahrzeugseite mit einem Lenkgestänge 13 verbunden, das mit einem Rad 14 zusammenwirkt. Selbstverständlich kann die elektrische Antriebseinheit 15 alternativ oder zusätzlich zu der Anordnung des Getriebes 11 an dem Drehstab 9 auch einen weiteren Antrieb aufweisen, der mechanisch über ein weiteres Getriebe in mechanischer Wirkverbindung mit der Zahnstange 12b steht. Selbstverständlich kann die gezeigte Antriebseinheit 15 auch über das Ritzel 12a mit der Zahnstange 12b wirkverbunden sein.

Die in Figur 1 dargestellte Lenkvorrichtung 2 stellt somit eine von einer Vielzahl von möglichen Ausführungsformen von für die Durchführung des erfindungsgemäßen Verfahrens geeigneten Lenkvorrichtungen dar. Demgemäß kann der Motor 15 der Hilfskraftlenkung auch derart angeordnet sein, dass er zusammen mit dem Drehstab 9 auf das in dem Lenkgetriebe 11 angeordnete Ritzel 12a wirkt oder aber direkt - mittels eines weiteren Ritzels - auf die Zahnstange 12b wirkt.

Die elektrische Antriebseinheit 15 wird mit elektrischer Energie betrieben, die über eine drei Phasen umfassende Leitung 26 der elektrischen Antriebseinheit 15 zugeführt wird. Die Leistungselektronik 28 ist hierfür mit einer Energieversorgung mit der Versorgungsspannung Vs verbunden und wird über Signale 30 von dem Steuergerät 6 betrieben.

Der Prozessor 3 wird mittels einer Überwachungseinheit 32 überwacht. Die Überwachungseinheit 32 übermittelt der Recheneinheit 3 Frage-Nachrichten, und erwartet korrekte Antwort-Nachrichten. Die Überwachungseinheit 32 inkrementiert oder dekrementiert bei einer von der korrekten Antwort-Nachricht abweichenden Antwort-Nachricht einen Fehlerzähler. Die Überwachungseinheit 32 trennt die elektrische Antriebseinheit 15 über die Leistungselektronik 28 und/oder die Recheneinheit 3 bzw. das Steuergerät 6 von einer Versorgungsspannung Vs bzw. von einer Energieversorgung über die Schalter 34 und/oder 36 bei einem Erreichen eines Schwellwerts durch den Fehlerzähler.

Des Weiteren umfasst das Lenksystem, 2 einen Sensor 18 an dem Drehstab 9, mittels dessen ein Messsignal T ermittelt und dem Steuergerät 6 zugeführt werden kann. Selbstverständlich können dem Steuergerät 6 noch weitere nicht gezeigte Messsignale zugeführt werden. In Abhängigkeit von diesen Messsignalen ermittelt das Steuergerät 6 das Signal 30 zur Lenkkraftunterstützung.

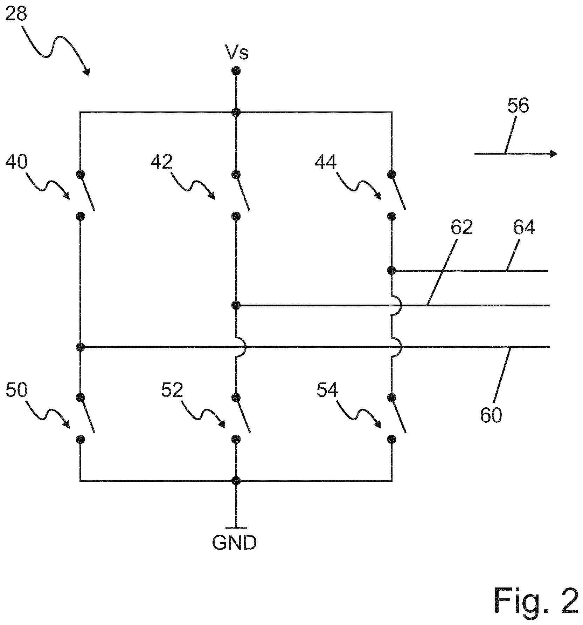

Figur 2 zeigt die Leistungselektronik 28 aus Figur 1 in beispielhafter Form. Selbstverständlich können auch andere Ansteuerungen zum Betrieb der elektrischen Antriebseinheit 15 verwendet werden. Die Leistungselektronik 28 umfasst drei mit einer Versorgungsspannung Vs verbundene Schalter 40, 42 und 44. Des Weiteren umfasst die Leistungselektronik 28 drei mit der Erdung GND verbundene Schalter 50, 52 und 54. In Richtung des Pfeils 56 ist die elektrische Antriebseinheit 15 angeordnet und mit der Leitung 26 verbunden. Die Schalter 40 und 50 sind mit einer ersten Phase 60 verbunden. Die Schalter 42 und 52 sind mit einer zweiten Phase 62 verbunden. Die Schalter 44 und 54 sind mit einer dritten Phase 64 verbunden. Die Phasen 60 bis 64 bilden die Leitung 26. Die Schalter 40 bis 44 und 50 bis 54 werden in Abhängigkeit von den Signalen 30, ausgehend von dem Steuergerät 6, betrieben. Die gezeigte Öffnungsstellung der Schalter 40 bis 54 ist lediglich beispielhaft. Mittels der Signale 30 werden die Schalter 40 bis 54 geöffnet oder geschlossen, um auf der Leitung 30 einen Dreiphasenwechselstrom zum Betrieb der elektrischen Antriebseinheit 15 zu erzeugen.

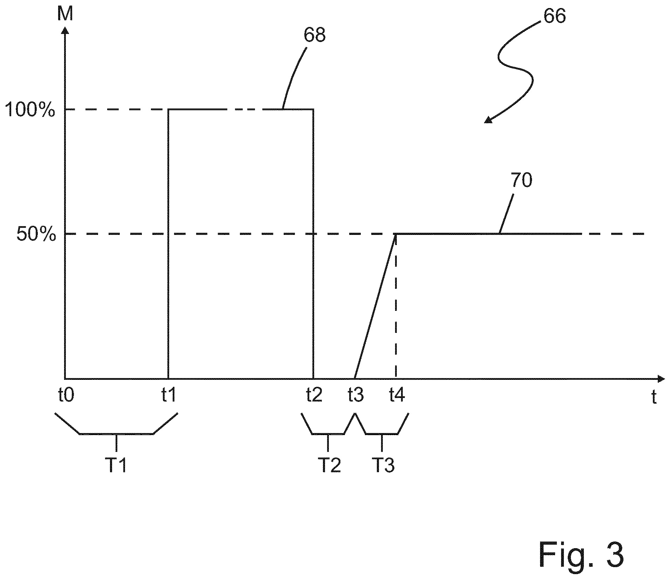

In Figur 3 ist schematisch ein Drehmoment-Zeit-Diagramm 66 gezeigt. Während einer ersten Zeitdauer T1, die sich von dem Zeitpunkt t0 bis zu einem Zeitpunkt t1 erstreckt, wird ein Cold-Boot durchgeführt. Nach dem Zeitpunkt t1 wird in einen Normalbetrieb gewechselt. Während des Normalbetriebs wird die elektrische Antriebseinheit 15 derart betrieben, dass gemäß dem Verlauf 68 stets 100% des der jeweiligen Antriebssituation entsprechenden Drehmoments M mittels der Antriebseinheit 15 in das Lenksystem 2 eingebracht werden können. Die 100 % des Drehmoments entsprechen beispielsweise einem Faktor von 1, der mit dem der Antriebssituation entsprechenden Drehmoment M multiplizierbar ist. Entsprechend wird für den Limp-Home-Betrieb ein Faktor kleiner Eins beispielsweise kleiner oder gleich 0,5 gewählt, der mit dem der Antriebssituation entsprechenden Drehmoment M multiplizierbar ist.

Zu dem Zeitpunkt t2 wird eine fehlerhafte Funktion der Software festgestellt, die auf dem Steuergerät 6 durch die Prozessoreinheit 3 ausgeführt wird. Durch die Feststellung der fehlerhaften Funktion der Software wird die Software deaktiviert, was einen Wegfall der Lenkkraftunterstützung durch die elektrische Antriebseinheit 15 zur Folge hat. Mithin fällt die verfügbare Lenkkraftunterstützung gemäß dem Verlauf 68 auf 0% ab.

Während einer zweiten Zeitdauer T2, die auch als Ausfallzeitdauer bezeichnet wird, und die von dem Zeitpunkt t2 bis zu dem Zeitpunkt t3 reicht, ist das Lenksystem ohne Lenkkraftunterstützung. Das bedeutet, dass die mechanische Rückfallebene des Lenksystems 4 genutzt wird, um während der zweiten Zeitdauer T2 das Kraftfahrzeug zu lenken.

Zu dem Zeitpunkt t3 wird in einen Limp-Home-Betrieb gewechselt, der einen geringeren Funktionsumfang aufweist als der Normalbetrieb des Lenksystems 2. Darüber hinaus wird in dem Limp-Home-Betrieb das Drehmoment gegenüber dem Normalbetrieb reduziert. Während einer dritten Zeitdauer T3, ausgehend von dem Zeitpunkt t3 bis zu dem Zeitpunkt t4 findet ein Einrampen des Drehmoments statt, um plötzliche Drehmomentsprünge zu verhindern. Dies geschieht beispielsweise dadurch, dass ein Faktor von 0 bis 0,5 zu Multiplikation mit dem zu erzeugenden Drehmoment ab dem Zeitpunkt t3 bis zum Zeitpunkt t4 erhöht wird. Der Verlauf 70 stellt somit den Limp-Home-Betrieb dar. In dem Limp-Home-Betrieb kann dem Fahrzeuglenker beispielsweise durch Aufleuchten einer Warnlampe zur Kenntnis gebracht werden, dass das Kraftfahrzeug zu einer Wartung in die Werkstatt gebracht werden muss.

Innerhalb der zweiten Zeitdauer T2 wird die elektrische Antriebseinheit 15 derart betrieben, so dass ein in die elektrische Antriebseinheit 15 eingeleitetes Drehmoment gedämpft wird. Die Dämpfung des eingeleiteten Drehmoments bedeutet, dass einem durch den Fahrer während der zweiten Zeitdauer T2 eingebrachten Drehmoment durch den entsprechenden Betrieb der elektrischen Antriebseinheit 15 entgegengewirkt wird. Selbstverständlich hat auch die Fahr- und Lenksituation in Zusammenwirkung mit dem Fahrbahnuntergrund Einfluss auf das eingeleitete Drehmoment. Allgemein bedeutet die Dämpfung des in die Antriebseinheit 15 eingeleiteten Drehmoments mithin einen Betrieb der Antriebseinheit 15, so dass die Antriebseinheit 15 ein über ein durch den Leerlauf der Antriebseinheit 15 erzeugtes Drehmoment hinausgehendes und dem eingeleiteten Drehmoment entgegengesetztes Drehmoment erzeugt. Bei einem Aufbringen eines über der Zeit veränderten Drehmoments durch den Fahrer wird während der Zeitdauer T2 durch die Dämpfung die Drehgeschwindigkeit des Lenkrads mittels der elektrischen Antriebseinheit 15 zumindest kurzzeitig verringert.

Während der Zeitdauer T2 wird in einer ersten Ausführungsform einer der Schalter 50, 52 und 54 geschlossen. In einer zweiten Ausführungsform werden zwei der Schalter 50, 52 und 54 geschlossen. In einer weiteren dritten Ausführungsform werden alle drei Schalter 50, 52 und 54 geschlossen.

In einer vierten Ausführungsform bleiben zwei der Schalter 50, 52 und 54 geöffnet und einer der Schalter 50, 52 und 54 wird in Abhängigkeit von einem pulsweiten modulierten Signal betrieben. In einer fünften Ausführungsform bleibt einer der Schalter 50, 52 und 54 geöffnet und zwei der Schalter 50, 52 und 54 werden in Abhängigkeit von einem pulsweiten modulierten Signal geöffnet oder geschlossen.

In einer sechsten Ausführungsform werden alle drei Schalter 50, 52 und 54 in Abhängigkeit von einem pulsweitenmodulierten Signal geöffnet oder geschlossen. Selbstverständlich können auch pulsweitenmodulierte Signale mit unterschiedlichen Pulsdauern den einzelnen Schaltern 50 bis 54 zugeführt werden.

Selbstverständlich lassen sich anstatt der Schalter 50 bis 54 auch die Schalter 40 bis 44 nach den vorgenannten Ausführungsformen betreiben, wobei die Schalter 50 bis 54 geöffnet sind.

Während der Zeitdauer T2 ist die Software nicht aktiv, weshalb in einer Ausführungsform noch während des normalen Fahrbetriebs vor oder bei Eintritt in die Zeitdauer T2 der Zustand der Schalter 40 bis 54 für die Zeitdauer T2 festgelegt wird.

Im Falle eines pulsweitenmodulierten Signals wird dieses von einer Pulsweiteneinheit während der Zeitdauer T2 erzeugt, die bevorzugt in Hardware ausgeführt ist. Die Parameter für die Pulsweitenmodulierung, insbesondere Tastgrad und/oder Pulsweite, werden noch vor Eintritt in die Zeitdauer T2 in Abhängigkeit von der Drehzahl der Antriebseinheit 15 von der Software ermittelt und in einem Register gespeichert. Das Register kann zu Beginn und während der Zeitdauer T2 von der weiteren Einheit ausgelesen werden, um die Pulsweitenmodulierung während der Zeitdauer T2 durchzuführen. Mithin sind Tastgrad und/oder Pulsweite in Abhängigkeit von einem Zustand vor oder bei Erkennung des Softwarefehlers ermittelbar. Die weitere Einheit ist insbesondere ein Timer-Modul, das in Hardware ausgeführt ist.

Die Überwachungseinheit 32 wird zu Beginn der zweiten Zeitdauer T2 und/oder während der zweiten Zeitdauer T2 und/oder in Abhängigkeit von der Erkennung der fehlerhaften Funktion der Software derart betrieben, so dass die Wahrscheinlichkeit, dass die Überwachungseinheit 32 die elektrische Antriebseinheit 15 und/oder die Recheneinheit 3 und damit das Steuergerät 6 während der zweiten Zeitdauer T2 von der Energieversorgung trennt, reduziert wird. Hierfür wird zu Beginn der zweiten Zeitdauer T2 und/oder während der zweiten Zeitdauer T2 und/oder in Abhängigkeit von der Erkennung der fehlerhaften Funktion der Software die Frequenz der Frage-Nachrichten von der Überwachungseinheit 32 und/oder die Frequenz der Antwort-Nachrichten an die Überwachungseinheit 32 erhöht.

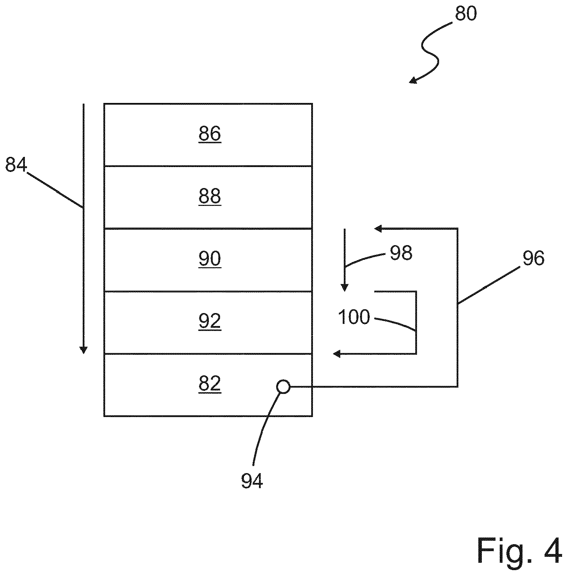

Figur 4 zeigt in einem schematischen Diagramm 80 den Start der Software auf dem Steuergerät 6. Ein Fahrbetrieb 82 wird im Rahmen eines Cold-Boots gemäß einem Pfeil 84 erst nach Durchlaufen der Blöcke 86, 88, 90 und 92 erreicht. Der Block 86 stellt eine Einsprungbedingung dar. Der Block 88 stellt einen Boot-Block dar, in dem überprüft wird, ob eine Aktualisierung der Software durch ein Nachflashen erforderlich ist, und falls die Aktualisierung der Software erforderlich ist, diese durchgeführt wird. Der Block 90 stellt einen Speicherintegritätstest dar und dient zur Initialisierung des Speichers 5. Der Block 92 stellt einen Test der Abschaltphase dar. Während des Fahrbetriebs 82 wird gemäß dem Kreis 94 ein Softwarefehler erkannt. Die Erkennung eines Softwarefehlers kann beispielsweise durch die Erkennung eines Stack-Überlaufs, einer Laufzeit-Überprüfung oder durch einen Vergleich von Ergebnissen redundant ausgeführter Algorithmen ausgelöst werden. Selbstverständlich umfasst der Fahrbetrieb 82 sowohl den Normalbetrieb 68 als auch den Limp-Home-Betrieb 70. Wird ein Software-Fehler im Limp-Home-Betrieb erkannt, so wird die Lenkkraftunterstützung abgeschaltet.

Nach Erkennung eines Softwarefehlers im Normalbetrieb wird die Software im Rahmen eines Soft-Boots neu gestartet. Der Soft-Boot wird auch als Neustart der Software bezeichnet. Der Soft-Boot umfasst einen Start der Software bei betriebsbereiter Hardware. Ausgehend von der Erkennung des Softwarefehlers 94 wird gemäß dem Pfeil 96 und dem Pfeil 98 der Block 90 durchlaufen. Nach Durchlaufen des Blocks 90 wird gemäß dem Pfeil 100 wieder in den Fahrbetrieb 82 gewechselt. Durch das Auslassen der Blöcke 86, 88 und 92 ist die zweite Zeitdauer T2 kleiner als die erste Zeitdauer T1.

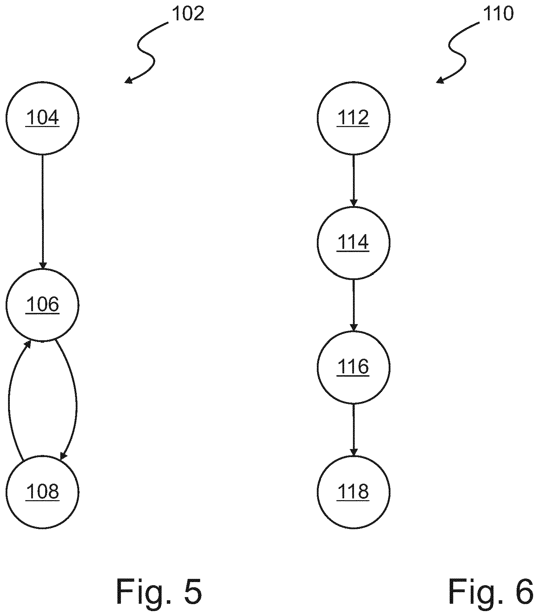

Figur 5 zeigt einen Zustand-Übergangs-Diagramm 102. In einem Zustand 104 wird die Software gemäß einem Cold-Boot gestartet. Der Cold-Boot wird auch als Kaltstart bezeichnet und umfasst sowohl einen Start der Hardware als auch einen Start der Software nach einem stromlosen Zustand der Hardware. Nach dem Starten der Software mittels des Cold-Boots wird in den Fahrbetrieb gemäß einem Zustand 106 gewechselt. Bei Erkennen eines Softwarefehlers wird in den Zustand 108 gewechselt, in dem während der zweiten Zeitdauer T2 die Software gemäß dem Soft-Boot neu gestartet wird. Nach dem Neustart der Software mittels des Soft-Boots wird wieder in den Fahrbetrieb gemäß dem Zustand 106 gewechselt. Im Unterschied zu Figur 3 umfasst das Diagramm 102 keinen Limp-Home-Betrieb.

Figur 6 zeigt ein Zustands-Übergangs-Diagramm 110. In einem Zustand 112 wird der Cold-Boot durchgeführt. Nach dem Starten der Software wird der Normalbetrieb gemäß einem Zustand 114 ausgeführt. Beim Erkennen eines Fehlers der Software im Normalbetrieb wird in einen Zustand 116 gewechselt, in dem während der zweiten Zeitdauer T2 die Software gemäß dem Soft-Boot neu gestartet wird. Nach dem Neustart der Software wird in einen Zustand 118 gewechselt, der dem Limp-Home-Betrieb entspricht.

Der Start der Software während der ersten Zeitdauer T1 ist der Cold-Boot. Der Neustart der Software während der zweiten Zeitdauer T2 ist der Soft-Boot. Der Cold-Boot umfasst einen Hardware-Integritätstest und/oder eine Software-Update-Prüfung. Der Soft-Boot sowie der Neustart der Software umfasst weder den Hardware-Integritätstest noch die Software-Update-Prüfung.

## Patentansprüche

1. Verfahren zum Betreiben eines Lenksystems (2) eines Kraftfahrzeugs mit einer elektrischen Antriebseinheit (15) zur Lenkkraftunterstützung, die mittels einer Software betrieben wird, **dadurch gekennzeichnet, dass** während eines Neustarts der Software die Antriebseinheit (15) derart betrieben wird, so dass ein in die Antriebseinheit (15) eingeleitetes Drehmoment gedämpft wird.

2. Verfahren nach Anspruch 1, wobei während des Neustarts der Software zur Dämpfung des in die Antriebseinheit (15) eingeleiteten Drehmoments zumindest zwei, insbesondere drei, Antriebsphasen (60, 62; 62, 64; 64, 62) der elektrischen Antriebseinheit (15) kurzgeschlossen werden.

3. Verfahren nach Anspruch 1, wobei während des Neustarts der Software zur Dämpfung des in die Antriebseinheit (15) eingeleiteten Drehmoments die elektrische Antriebseinheit (15) in Abhängigkeit von einem pulsweitenmodulierten Signal betrieben wird.

4. Verfahren nach Anspruch 3, wobei das pulsweitenmodulierte Signal in Abhängigkeit von einem vor oder bei Feststellung einer fehlerhaften Funktion der Software von der elektrischen Antriebseinheit (15) erzeugten Drehmoment und/oder in Abhängigkeit von einer Drehzahl der elektrischen Antriebseinheit (15) vor oder bei Feststellung der fehlerhaften Funktion der Software und/oder in Abhängigkeit von einem vor oder bei Feststellung der fehlerhaften Funktion der Software vom Fahrer erzeugten Fahrermoment erzeugt wird.

5. Verfahren nach einem der vorstehenden Ansprüche, wobei zwischen zwei Antriebsphasen (60, 62; 62, 64; 64, 62) ein schließbarer Schalter (50, 52; 52, 54; 50, 54; 40, 42; 42, 44; 40, 44) angeordnet ist, und wobei der Schalter (40-54) für die Dämpfung des eingeleiteten Drehmoments zu einem Kurschluss der zwei Antriebsphasen (60, 62; 62, 64; 64, 62) geschlossen wird.

6. Verfahren nach Anspruch 3 und 5, wobei der Schalter (40-54) während der zweiten Zeitdauer (T2) in Abhängigkeit von dem pulsweitenmodulierten Signal, insbesondere in Abhängigkeit von einer steigenden oder fallenden Flanke des pulsweitenmodulierten Signals, geöffnet oder geschlossen wird.

7. Verfahren nach einem der vorstehenden Ansprüche, wobei während des Neustarts der Software für eine vor dem Neustart der Software vorliegende Drehzahl der Antriebseinheit (15) oberhalb eines Schwellwerts keine Dämpfung des in die Antriebseinheit (15) eingeleiteten Drehmoments durchgeführt wird.

8. Verfahren nach einem der vorstehenden Ansprüche, wobei während eines Startbetriebs (84) des Lenksystems, insbesondere des Kraftfahrzeugs, die Software während einer ersten Zeitdauer (T1) gestartet wird, wobei während eines Fahrbetriebs (82) des Kraftfahrzeugs eine fehlerhafte Funktion der Software festgestellt wird, und wobei in Abhängigkeit von der Feststellung der fehlerhaften Funktion der Software der Neustart der Software derart durchgeführt wird, so dass die zweite Zeitdauer (T2) kleiner ist als die erste Zeitdauer (T1).

9. Verfahren nach einem der vorstehenden Ansprüche, wobei nach dem Neustart der Software in einen Limp-Home-Betrieb (70) gewechselt wird, wobei der Limp-Home-Betrieb (70) gegenüber einem vor dem Neustartausgeführten Normalbetrieb (68) einen geringeren Funktionsumfang, insbesondere keine Parkassistenzfunktion und/oder keine Spurhaltefunktion aufweist, und wobei das von der elektrischen Antriebseinheit (15) in das Lenkgestänge (21) eingebrachte Drehmoment während des Limp-Home-Betriebs (70) gegenüber dem Normalbetrieb (68) um einen Faktor, insbesondere 0,5, reduziert wird.

10. Verfahren nach einem der vorstehenden Ansprüche, wobei eine Recheneinheit (3) für die Ausführung der Software mittels einer Überwachungseinheit (32) überwacht wird, und wobei die Überwachungseinheit (32) während eines Neustarts der Software derart betrieben wird, so dass die Wahrscheinlichkeit, dass die Überwachungseinheit (32) die elektrische Antriebseinheit (15) und/oder die Recheneinheit (3) während der zweiten Zeitdauer (T2) von einer Energieversorgung (Vs) trennt, reduziert wird.

11. Verfahren nach einem der Ansprüche 8 bis 10, wobei die zweite Zeitdauer (T2) kleiner oder gleich 200 ms und die erste Zeitdauer (T1) größer als 200 ms ist, oder wobei die zweite Zeitdauer (T2) kleiner oder gleich 300 ms und die erste Zeitdauer (T1) größer als 300 ms ist, oder wobei die zweite Zeitdauer (T2) kleiner oder gleich 500 ms ist und die erste Zeitdauer (T2) größer als 500 ms ist.

12. Computerprogramm für ein digitales Rechengerät, das dazu ausgebildet ist, ein Verfahren nach einem der Ansprüche 1 bis 11 auszuführen.

13. Steuergerät (6) zum Betreiben eines Lenksystems (4) eines Kraftfahrzeugs, das mit einem digitalen Rechengerät (3) insbesondere einem Mikroprozessor versehen ist, auf dem ein Computerprogramm nach dem Anspruch 12 lauffähig ist.

14. Speichermedium für ein Steuergerät (6) nach Anspruch 13, auf dem ein Computerprogramm nach Anspruch 12 abgespeichert ist.

15. Lenksystem (4) eines Kraftfahrzeugs, das dazu ausgebildet ist, um ein Verfahren nach einem der Ansprüche 1 bis 11 auszuführen.

## Claims

1. Method for operating a steering system (2) of a motor vehicle having an electric drive unit (15) for boosting the steering force, which drive unit is operated by means of software, **characterized in that** during a restart of the software the drive unit (15) is operated in such a way that the torque which is introduced into the drive unit (15) is damped.

2. Method according to Claim 1, wherein during the restart of the software, at least two, in particular three, drive phases (60, 62; 62, 64; 64, 62) of the electric drive unit (15) are shortcircuited in order to damp the torque which is introduced into the drive unit (15).

3. Method according to Claim 1, wherein during the restart of the software, the electric drive unit (15) is operated as a function of a pulse-width-modulated signal in order to damp the torque which is introduced into the drive unit (15).

4. Method according to Claim 3, wherein the pulse-width-modulated signal is generated as a function of a torque which is generated by the electric drive unit (15) before or during the detection of a faulty function of the software, and/or as a function of a rotational speed of the electric drive unit (15) before or during the detection of the faulty function of the software, and/or as a function of a driver torque generated by the driver before or during the detection of the faulty function of the software.

5. Method according to one of the preceding claims, wherein a closable switch (50, 52; 52, 54; 50, 54; 40, 42; 42, 44; 40, 44) is arranged between two drive phases (60, 62; 62, 64; 64, 62), and wherein the switch (40-54) is closed in order to short-circuit the two drive phases (60, 62; 62, 64; 64, 62) for the purpose of damping the introduced torque.

6. Method according to Claim 3 and 5, wherein the switch (40-54) is opened or closed during the second time period (T2) as a function of the pulse-width-modulated signal, in particular as a function of a rising or falling edge of the pulse-width-modulated signal.

7. Method according to one of the preceding claims, wherein during the restart of the software, no damping of the torque which is introduced into the drive unit (15) is carried out for a rotational speed of the drive unit (15) which is above a threshold value and is present before the restart of the software.

8. Method according to one of the preceding claims, wherein during a starting mode (84) of the steering system, in particular of the motor vehicle, the software is started during a first time period (T1), wherein during a driving mode (82) of the motor vehicle a faulty function of the software is detected, and wherein the restart of the software is carried out as a function of the detection of the faulty function of the software in such a way that the second time period (T2) is shorter than the first time period (T1).

9. Method according to one of the preceding claims, wherein after the restart of the software, the system is changed to a limp-home mode (70), wherein the limp-home mode (70) has a smaller functional scope compared to a normal mode (68) carried out before the restart, in particular does not have a parking assistance function and/or does not have a lane keeping function, and wherein the torque which is input into the steering linkage (21) by the electric drive unit (15) during the limp-home mode (70) is reduced compared to the normal mode (68) by a factor, in particular 0.5.

10. Method according to one of the preceding claims, wherein a computing unit (3) for executing the software is monitored by means of a monitoring unit (32), and wherein the monitoring unit (32) is operated during a restart of the software in such a way that the probability of the monitoring unit (32) disconnecting the electric drive unit (15) and/or the computing unit (3) from a power supply (Vs) during the second time period (T2) is reduced.

11. Method according to one of Claims 8 to 10, wherein the second time period (T2) is shorter than or equal to 200 ms, and the first time period (T1) is longer than 200 ms, or wherein the second time period (T2) is shorter than or equal to 300 ms, and the first time period (T1) is longer than 300 ms, or wherein the second time period (T2) is less than or equal to 500 ms, and the first time period (T2) is longer than 500 ms.

12. Computer program for a digital computing device is designed to carry out a method according to one of Claims 1 to 11.

13. Control device (6) for operating a steering system (4) of a motor vehicle which is provided with a digital computing device (3), in particular a microprocessor on which a computer program according to Claim 12 can run.

14. Storage medium for a control device (6) according to Claim 13 on which a computer program according to Claim 12 is stored.

15. Steering system (4) of a motor vehicle which is designed to carry out a method according to one of Claims 1 to 11.

## Revendications

1. Procédé destiné à faire fonctionner un système de direction (2) d'un véhicule automobile, comportant une unité d'entraînement électrique (15) pour l'assistance à la force de direction, qui est commandée au moyen d'un logiciel, **caractérisé en ce que**, pendant un redémarrage du logiciel, l'unité d'entraînement (15) est commandée de manière à amortir un couple introduit dans l'unité d'entraînement (15).

2. Procédé selon la revendication 1, dans lequel, pendant le redémarrage du logiciel, au moins deux, en particulier trois, phases d'entraînement (60, 62 ; 62, 64 ; 64, 62) de l'unité d'entraînement électrique (15) sont court-circuitées pour amortir le couple introduit dans l'unité d'entraînement (15).

3. Procédé selon la revendication 1, dans lequel, pendant le redémarrage du logiciel, l'unité d'entraînement électrique (15) est mise en fonctionnement en fonction d'un signal modulé en largeur d'impulsion pour amortir le couple introduit dans l'unité d'entraînement (15).

4. Procédé selon la revendication 3, dans lequel le signal modulé en largeur d'impulsion est généré en fonction d'un couple généré par l'unité d'entraînement électrique (15) avant ou lors de la détection d'une fonction défectueuse du logiciel et/ou en fonction d'une vitesse de rotation de l'unité d'entraînement électrique (15) avant ou lors de la détection de la fonction défectueuse du logiciel et/ou en fonction d'un couple de conducteur généré par le conducteur avant ou lors de la détection de la fonction défectueuse du logiciel.

5. Procédé selon l'une des revendications précédentes, dans lequel un commutateur pouvant être fermé (50, 52 ; 52, 54 ; 50, 54 ; 40, 42 ; 42, 44 ; 40, 44) est disposé entre deux phases d'entraînement (60, 62 ; 62, 64 ; 64, 62), et dans lequel le commutateur (40-54) est fermé afin de court-circuiter les deux phases d'entraînement (60, 62 ; 62, 64 ; 64, 62) pour amortir le couple introduit.

6. Procédé selon les revendications 3 et 5, dans lequel le commutateur (40-54) est ouvert ou fermé pendant la deuxième période (T2) en fonction du signal modulé en largeur d'impulsion, en particulier en fonction d'un front montant ou descendant du signal modulé en largeur d'impulsion.

7. Procédé selon l'une des revendications précédentes, dans lequel, pendant le redémarrage du logiciel, aucun amortissement du couple introduit dans l'unité d'entraînement (15) n'est effectué lorsque la vitesse de rotation de l'unité d'entraînement (15) existant avant le redémarrage du logiciel est supérieure à une valeur de seuil.

8. Procédé selon l'une des revendications précédentes, dans lequel le logiciel est lancé au cours d'une première période (T1) lors d'une opération de démarrage (84) du système de direction, en particulier du véhicule automobile, dans lequel une fonction défectueuse du logiciel est détectée pendant la conduite (82) du véhicule automobile, et dans lequel le logiciel est redémarré de manière à ce que la deuxième période (T2) soit inférieure à la première période (T1), en fonction de la détection d'une fonction défectueuse du logiciel.

9. Procédé selon l'une des revendications ci-dessus, dans lequel, après le redémarrage, le logiciel est mis en mode dégradé (70), dans lequel le fonctionnement en mode dégradé (70) présente une gamme de fonctions inférieure à celle d'un fonctionnement normal (68) mis en oeuvre avant le redémarrage, en particulier aucune fonction d'aide au stationnement et/ou aucune fonction de suivi de voie, et dans lequel le couple introduit par l'unité d'entraînement électrique (15) dans la timonerie de direction (21) est réduit d'un certain facteur, en particulier de 0,5, pendant le fonctionnement en mode dégradé (70) par rapport au fonctionnement normal (68).

10. Procédé selon l'une des revendications précédentes, dans lequel une unité de calcul (3) destinée à exécuter le logiciel est surveillée au moyen d'une unité de surveillance (32), et dans lequel l'unité de surveillance (32) est mise en fonctionnement pendant un redémarrage du logiciel de manière à réduire la probabilité que l'unité de surveillance (32) sépare le moteur électrique (15) et/ou l'unité de calcul (3) d'une alimentation en énergie (Vs) pendant la deuxième période (T2).

11. Procédé selon l'une des revendications 8 à 10, dans lequel la deuxième période (T2) est inférieure ou égale à 200 ms et la première période (T1) est supérieure à 200 ms, ou dans lequel la deuxième période (T2) est inférieure ou égale à 300 ms et la première période (T1) est supérieure à 300 ms, ou dans lequel la deuxième période (T2) est inférieure ou égale à 500 ms et la première période (T2) est supérieure à 500 ms et la première période (T2) est supérieure à 500 ms.

12. Programme d'ordinateur destiné à un appareil informatique numérique conçu pour mettre en oeuvre un procédé selon l'une des revendications 1 à 11.

13. Dispositif de commande (6) destiné à faire fonctionner un système de direction (4) d'un véhicule automobile, qui est muni d'un appareil de calcul numérique (3), en particulier d'un microprocesseur, sur lequel un programme informatique selon la revendication 12 peut être exécuté.

14. Support de stockage destiné à un appareil de commande (6) selon la revendication 13, sur lequel est stocké un programme d'ordinateur selon la revendication 12.

15. Système de direction (4) d'un véhicule automobile conçu pour mettre en oeuvre un procédé selon l'une des revendications 1 à 11.
